# EUROPEAN PATENT SPECIFICATION

(11) **EP 3 612 065 B1**
(45) Date of publication and mention of the grant of the patent: **14.06.2023**
(21) Application number: 18788272.5
(22) Date of filing: 17.04.2018
(51) Int. Cl.: A47J 43/07, A47J 43/08

(54) **REDUCED SOUND ELECTRIC APPLIANCE**
ELEKTRISCHES GERÄT MIT VERRINGERTEM GERÄUSCH
APPAREIL ÉLECTRIQUE À BRUIT RÉDUIT

(30) Priority: 18.04.2017 US 201762486639 P; 23.05.2017 US 201762509863 P
(43) Date of publication of application: 26.02.2020
(73) Proprietor: Sunbeam Products, Inc., Boca Raton, FL 33431 (US)
(72) Inventor: SPENCER, Joseph C., Jr., Hattiesburg, MS 39402 (US); HACK, Gregary, Hallandale, FL 33009 (US)
(74) Representative: Cabinet Beau de Loménie
(86) International application number: PCT/US2018/027908
(87) International publication number: WO 2018/195039

(56) References cited:
- EP-A1- 2 407 071
- WO-A1-2006/070980
- JP-A- H0 473 022
- KR-U- 19990 007 086
- US-A- 3 901 484
- US-A- 5 273 358
- US-A- 5 495 795
- US-A1- 2003 042 805
- US-A1- 2006 007 778
- US-A1- 2006 126 431
- US-A1- 2012 294 109
- US-A1- 2015 044 344
- US-A1- 2016 348 697
- US-B2- 9 084 512

## Description

### Field of the Invention

The present invention relates to an electric appliance and, more particularly, to a reduced sound electric appliance.

### Background of the Invention

Various electric appliances are known that utilize a mixing container, a motorized base, and a lid. Food processors and blenders, for example, generally embody such a structure. For ease of reference herein, such electric appliances will be referred to hereinafter as blenders. Blenders generally dispense blended contents by removing the lid from the mixing container, lifting the mixing container from the base, and pouring the blended contents from the mixing container into some type of vessel. However, these blending appliances suffer drawbacks.

Blending is an inherently noisy and violent operation. The motor noise created by the motorized base during blending is generally very loud. Spinning agitator blades at high RPM against objects to pulverize, cavitate, and chop contents within the mixing container causes the contents to impact against the walls of the jar. This creates additional impact noise over an unpredictable frequency range, depending on the contents of the mixing container. Further, transferring power from the motor to the agitator blades also creates vibration and noise. The coupling structure between the agitator blades in the mixing container and the motor shaft in the base also creates vibration and noise. Many blenders also utilize a cooling fan, which itself creates noise. The large amount of noise caused by many components of a blender or other similar appliance is a significant disadvantage.

It is therefore desirable to design a blender or other electric appliance so as to reduce the noise generated by the interaction of the various components of the blender or other electric appliance.

US 9084512 discloses a blender base according to the preamble of claim 1.

US 2006/007778 discloses a blender with cooling and muffling functions.

US 3901484 discloses an electric food blender.

US 5495795 discloses a juice extractor.

US 2016/348697 discloses a reduce noise appliance.

WO 2006/070980 discloses a cooking apparatus with blending and heating functions.

US 2015/044344 discloses a method and an apparatus for using a blender with noise damping elements.

US 2006/126431 discloses an automatic stirring travel beverage container.

EP 2407071 discloses a household apparatus with an electric motor.

### Summary of the Invention

An electric appliance typically includes a body or base assembly which includes a motor for coupling to an agitator system associated with ajar or mixing container that couples to the base assembly. The present electric appliance is specifically designed to reduce the sound or noise generated by the electric appliance. To achieve the objects, the present invention provides an electric appliance according to claim 1, further details are described in the dependent claims. This is accomplished by improving the transfer of motor power from the base motor to the agitator system, redesigning the mixing container to suppress the sound produced from the agitation of the contents within the mixing container, improving the coupling mechanism between the motor and the agitator system to minimize any vibrational elements transmitted by the base motor or the agitator during rotation, improving the motor mount arrangement to minimize forced vibration through dampening, providing a muffler configuration in the base assembly that at least partially surrounds the motor for both cooling the motor and suppressing the high pressure sound waves generated by the operation of the motor, and redesigning the cooling fan.

The present base assembly includes at least one floating mount, preferably four floating mounts, that is attached between the motor muffler assembly and the base motor mount in the base assembly. Each floating mount includes an attachment mechanism that allows for some horizontal movement or floating of the motor relative to the base assembly but prevents vertical movement of the motor relative to the base assembly. The use of floating motor mounts helps to eliminate any vibration emitted by the motor and transferred to the base housing.

More particularly a muffler assembly is also provided that at least partially surrounds the motor within the base housing and uses a sealed compartment or chamber with throughholes to allow for reduction of pressure waves generated by the motor inside a sound absorbing material. The muffler assembly includes an inner muffler wall having a plurality of throughholes extending therethrough, an outer muffler wall, and a muffler cavity or chamber formed therebetween. The muffler cavity includes sound dampening material for dampening the high pressure sound waves emanating from the motor. These sound waves enter the muffler cavity through the plurality of throughholes and are exposed to the sound dampening material which causes a drop in the noise level over a wide range of natural frequencies emitted by the motor. The muffler assembly is also configured to provide support to the motor brackets which create the floating motor mounts. The muffler assembly further provides a clearly defined airflow path for cooling the motor, forcing air directly over and around the motor components. The muffler assembly creates a tunnel area around the motor that channels in air over the top of the motor and down the length of the motor and its components thereby creating a good cooling environment.

Another major contributor to the overall system noise associated with conventional electric appliances is the airflow caused by an attached axial fan typically associated with conventional blenders and other electric appliances. The prior art axial fan is used for cooling the motor and electronic PC boards associated with the unit and because axial fans are typically made of a stamped metal material, such fans generate a high sound level output at a broad spectrum of frequencies. The present electric appliance replaces the axial fan with a centrifugal fan that is positioned within the base body for circulating airflow along a much longer airflow path wherein the airflow changes from axial flow over the motor to lateral flow through a 90° centrifugal fan. In addition, to limit airflow noise, the present electrical appliance includes a torturous airflow path over and around the base motor to not only cool the motor but to also cool components heated by electrical current and friction including the electronic PC boards associated with the base housing. This torturous airflow path also includes pockets of low pressure that also alternate the sound from the motor. The airflow drawn into the base housing by the centrifugal fan changes direction multiple times through the tortuous path which includes a plurality of baffles positioned within at least a portion of the airflow path to further reduce airflow noise and cooling fan noise.

Another embodiment not according to the invention and described for illustration purposes only of the present electric appliance to reduce airflow noise caused by the centrifugal or axial fan attached to the motor includes incorporation of a fan which is not attached to the appliance motor but instead is driven by a separate DC motor. In this particular embodiment, the cooling fan speed can be controlled based upon the amount of cooling that is actually needed in the system. Since a detachable fan is not connected to the base motor for rotation, it can operate at much lower speeds as compared to a fan attached to the base motor thereby creating less airflow noise. A detachable fan can cool the heat buildup in the motor and other electrical components by varying its speed. This changes the airflow over the motor to provide the necessary amount of cooling needed depending upon the particular electric appliance application.

More particularly in an effort to reduce and suppress the noise generated from agitation of the contents within the mixing container, the present mixing container or mixing jar includes a double walled structure configured to absorb sound waves through the use of two individually molded jars. The jar assembly includes an inner wall forming an inner jar container and an outer wall forming an outer jar structure, the outer wall being spaced from the inner wall so as to form an air gap therebetween, the air gap forming the outer jar container. The inner jar container is the blending chamber that stores, contains and houses all of the contents that a particular user wants to blend. The inner jar wall is connected to the outer jar wall using a soft durometer elastomer that prevents vibration transfer from the inner jar wall to the outer jar wall. Since the outer jar wall is isolated from the inner jar wall through the air gap formed therebetween, it dampens any noises attributed to regular blending. This includes vibrational noises created from the agitator blades moving at high speed as well as any material being liquefied. The inner jar container includes the agitator blade system and houses a lid which seals off the inner jar container from the ambient environment. The outer jar container may remain open at both its top and/or bottom portions, or one or both end portions of the outer jar container can be sealed. In this regard, a lid can be fabricated to seal off both the inner and outer jar containers if the top portion of the outer jar container remains open to the ambient environment, or the lid can seal off just the inner jar mixing container if at least the top portion of the outer jar container is closed.

More particularly the bottom portion of the inner jar container includes a plurality of threads for mating and attaching to an attachment collar which includes the agitator blade system. The attachment collar threads onto the inner jar container threads to fix the agitator blade system to the bottom of the inner jar container. The bottom of the mixing container likewise includes a coupling mechanism for cooperative engagement with a corresponding coupling mechanism fixed to the base housing for attaching the mixing container assembly to the base housing. When the mixing container assembly is set on top of the base housing, the base coupling mechanism attaches to the mixing container or jar coupling mechanism and couples the base motor shaft to the agitator shaft associated with the agitator blade system. This coupling transfers the rotation of the base motor to the agitator blades for blending. This coupling mechanism has been improved to suppress additional noise and to minimize vibrational elements transmitted by the motor or agitator assembly during rotation. This coupling mechanism is self-aligning and includes a metal inner piece as well as a soft elastomer over mold associated with the base coupling which prevents vibrational transfer between the motor and the agitator. The jar coupling is likewise made of a metal inner core and may likewise include an over molded soft elastomer to again absorb any motor vibration or coupling misalignment when the jar assembly is attached to the base housing. This improved over molded feature using a soft elastomer substantially eliminates all of the coupling noise from the present system including vibrations emitted from the agitator or motor and it likewise creates less tolerances between the engagement of the mixing container or jar assembly to the base housing.

Preferably the present motor is also reversible and because a centrifugal fan is used to generate the necessary airflow for cooling, a constant direction airflow is achieved regardless of the direction the motor is turning.

Still other objects and advantages of the present electric appliance and the mechanisms utilized for reducing noise from the operation of such electric appliance will become apparent to those skilled in the art.

### Brief Description of the Drawings

Fig. 1 is a perspective view of an electric appliance constructed in accordance with the teachings of one embodiment of the present invention.
Fig. 2 is a perspective view of the electric appliance of Fig. 1 but with the lid member removed.
Fig. 3 is an elevational cross-section of the electric appliance of Figs. 1 and 2 taken from front to rear of the appliance showing the jar assembly and base assembly constructed in accordance with the teachings of one embodiment of the present invention.
Fig. 4A is a top planform view of one embodiment of a lid member constructed in accordance with the teachings of the present invention.
Fig. 4B is a bottom planform view of the lid member of Fig. 4A.
Fig. 5 is an elevational cross-section of the base assembly and a portion of the jar assembly of Fig. 1 taken from side to side of the appliance and constructed in accordance with the teachings of one embodiment of the present invention.
Fig. 6 is a perspective view of one embodiment of a centrifugal fan used in the electric appliance of Fig. 1 constructed in accordance with the teachings of one embodiment of the present invention.
Fig. 7 is a bottom planform view of the fan of Fig. 6.
Fig. 8 is an elevational cross-section of the base assembly of the electric appliance of Fig. 1 taken from front to rear of the appliance showing an airflow path in accordance with one embodiment of the present invention.
Fig. 9 is a bottom planform view of the base assembly of the electric appliance of Fig. 1 constructed in accordance with the teachings of one embodiment of the present invention showing the position and location of the intake and exhaust vents.
Fig. 10A is a perspective view of the bottom portion of the female jar coupling showing the inner core member and its associated plurality of cavities.
Fig. 10B is a perspective view of the top portion of the female jar coupling.
Fig. 11A is a perspective view of the male base coupling.
Fig. 11B is a cross sectional view of the male base coupling showing the inner core member, the drive portion, and the over molded soft elastomer.
Fig. 12A is an elevational cross-section of one embodiment of the present electric appliance of Fig. 1 showing the floating motor mounts associated with the base assembly.
Fig. 12B is an enlarged detailed cross-sectional view of one embodiment of the present floating motor mount.
Fig. 13 is an elevational view of one embodiment of the present floating motor mount.
Fig. 14 is a cross-sectional view of the floating motor mount of Fig. 13.

### Detailed Description of the Invention

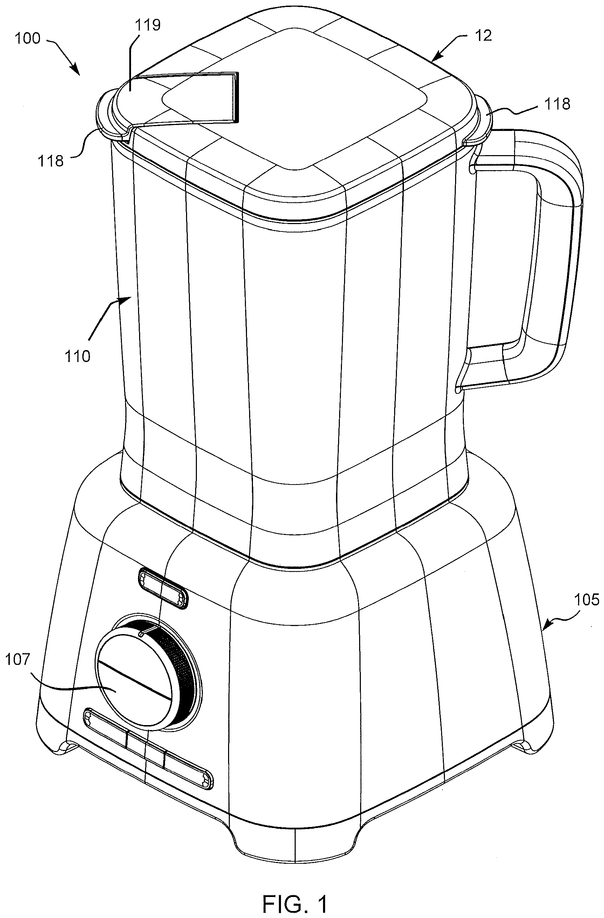

Referring to the drawings more particularly by reference numbers wherein like members refer to like parts, Fig. 1 illustrates an electric appliance 100 constructed in accordance with the teachings of one embodiment of the present invention. The electric appliance 100 is illustrated as a blender 100, but it is recognized and understood that the teachings hereof could apply to other electrical appliances equally as well. The blender 100 includes a base assembly 105, a mixing container or jar assembly 110, and a lid member 112. The jar assembly 110 is positioned on top of and engages with the base assembly 105 during operation as will be hereinafter explained. The base assembly 105 includes a control knob 107 for controlling the various modes of operation of the appliance. In this regard, it is recognized and anticipated that the base assembly 105 can take on a wide variety of different shapes and configurations and that other control interfaces can likewise be utilized with the base assembly 105 to control the operation of the appliance 100.

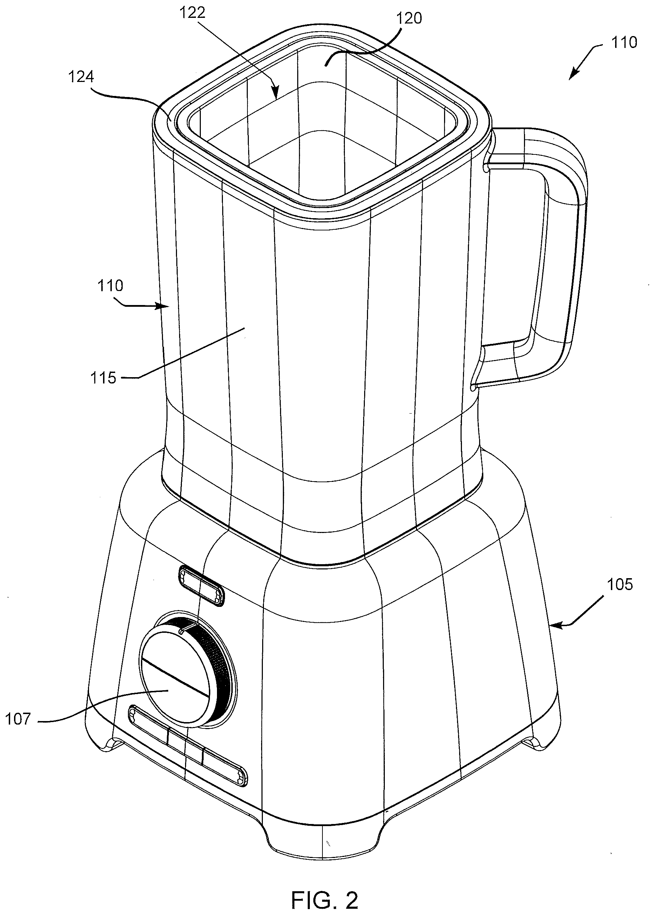

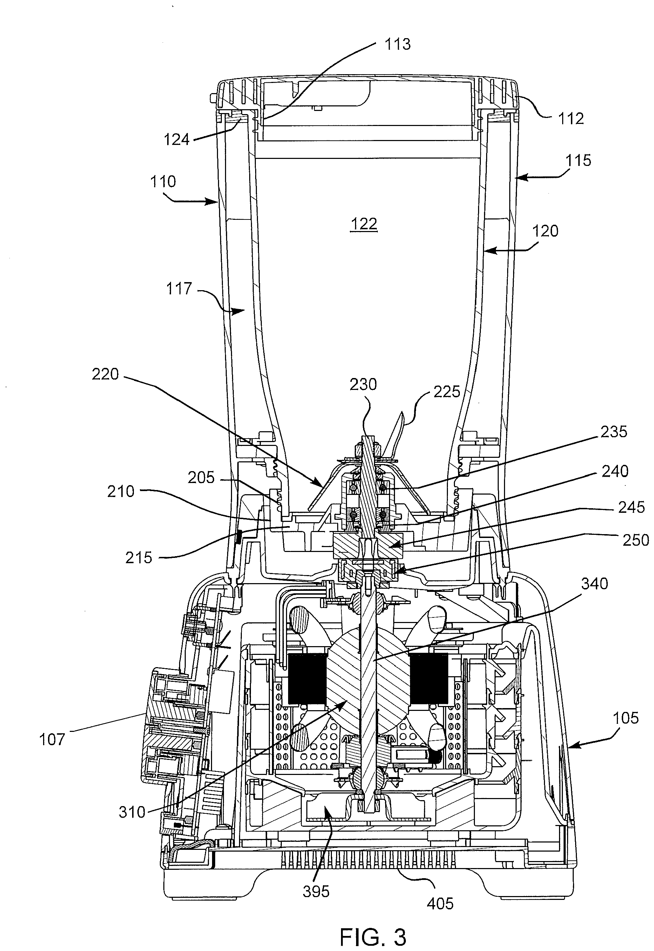

The jar assembly 110 includes an outer jar wall 115 and an inner jar wall 120 as best illustrated in Figs. 2 and 3. The inner jar wall 120 forms an inner jar container 122 which is the blending chamber and contains the contents to be blended. In an example embodiment illustrated in Figs. 2 and 3, the inner jar wall 120 is connected to the outer jar wall 115 using a soft low durometer elastomer 124 that helps prevent vibration transfer from the inner jar wall 120 to the outer jar wall 115 and also acts as a seal as will be further explained. The outer jar wall 115 is spaced from the inner jar wall 120 by an air gap 116 and the space or air gap 116 therebetween forms an outer jar container 117. The outer jar wall 115 is thereby isolated from the inner jar wall 120 by the air gap 116 and elastomeric materials such as the elastomer 124 to help suppress and dampen sound transfer from the blending agitator in the inner jar container 122 to the outer jar wall 115, which vibration transfer is attributed to regular blending. The inner jar container 122 can be made of a frequency dampening plastic such as Tritan to further reduce forced vibration transmission. Tritan has a greater absorption of impact energy as compared to other materials and thus emits less sound. The outer jar container 117 can likewise be made of Tritan and may be open at the top and/or bottom (not shown) or, in the embodiment illustrated in Figs. 2 and 3, it may be closed and/or sealed at the top and/or bottom by a low durometer elastomer such as elastomer 124.

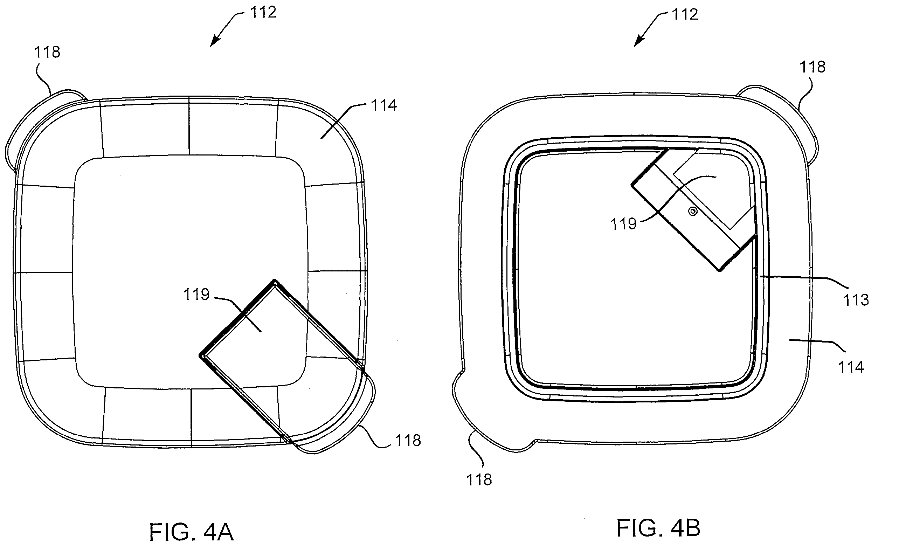

Seals may be used to further isolate the inner jar wall 120 from the outer jar wall 115. These seals allow for minimum transfer of any forced vibration caused from the rotating agitator blades at high speeds as well as any contents within the inner jar container 122 that is being liquefied. The top jar seal 124 creates a layer of insulation between the inner jar wall 120 and the outer jar wall 115 while connecting the two walls to one another. This seal still allows for an air gap 116 to exist between the inner jar wall 120 and the outer jar wall 115 while sealing off the top of the jar so that no liquids can enter the air buffer area 116. This top jar seal can be achieved in several different ways. First of all, if the outer jar container 117 is closed at its top end portion by the low durometer elastomer 124, this closure member 124 forms the top jar seal between the inner jar wall 120 and the outer jar wall 115. In this embodiment, a lid member such as a lid member 112 (Figs. 4A and 4B) will only need to seal the inner jar container 122 as illustrated in Fig. 2. In another embodiment, a lid member (not shown) may likewise use a double wall structure similar to jar assembly 110 to further minimize any vibration transmission caused by the contents striking the inner walls of the inner jar container 122 during blending. In this embodiment, the lid seals off the inner jar container 122 similar to lid member 112 and is mounted to the outer jar wall 115 to create an airtight seal using an elastomer to seal in the contents and prevent any vibration transition between the jar assembly 110 and the lid member. The jar assembly 110 may further include a bottom inner jar seal such as seal 215 illustrated in Fig. 3 which fixes the inner jar wall 120 to the outer jar wall 115 through a vibration-absorbing media while sealing off the bottom of the jar assembly from any liquids/solids.

As previously explained, if the outer jar container 117 is closed off at its top end portion as shown in Fig. 2, a lid such as lid 112 member may be used to seal off the inner jar container 122 as best shown in Fig. 3. In this embodiment as best shown in Figs. 4A and 4B, the lid member 112 will include a seal flange 113 for engaging the inner jar wall 120 and sealing off the inner jar container 122 as a closed chamber. The thickness of seal flange 113 has been increased to provide additional cushioning to the lid member so as to minimize any sound transfer and is preferably made of a soft durometer elastomer which provides the necessary flexure to create a temporary seal with the inner container 122. Since the outer jar container is already sealed off from the inner jar container using a soft durometer elastomer 124 at its at least top portion, the jar assembly 110 is completely sealed and closed off for operational use. In this regard, the lid member 112 includes an outer flange member or outer shell 114 which overlaps the air gap 116 and the elastomer 124 and provides the lid rigidity and an outer shell. In addition, the seal flange 113 can be over molded onto the outer flange member 114 as illustrated in Fig. 4B. A user can remove the lid member 112 by opening one of the corner tabs 118.

Where the top portion of the outer jar container 117 is left open, the lid member will need to seal off both the inner jar container 122 and the outer jar container 117. In this embodiment (not shown), the lid member may use a similar double wall structure as the jar assembly 110 to seal off the inner jar container 122 and the outer jar container 117 as well as to further help reduce noise. In this embodiment, the lid member mounts to both the inner jar wall 120 and the outer jar wall 115 and will include an inner seal flange similar to seal flange 113 and an outer seal flange which will overlap the outer jar wall 115 to create an airtight seal therebetween.

As can be seen in the cross-sectional view of the jar assembly 110 in Fig. 3, the inner jar wall 120 may include inner jar threads 205 which threadedly engage with an inner jar attachment collar 210. The collar 210 includes the agitator blade assembly 220 and allows the agitator assembly 220 to be mounted and attached to the inner jar container 122. The collar 210 creates a seal between the inner jar wall 120 and the inner jar bottom seal 215 to prevent contents of the inner jar container 122 from running out the bottom of the inner container 122. This also creates a waterproof bottom seal so that liquid can be placed in the inner jar container 122 without running out from the bottom of the agitator assembly 220.

The agitator blade assembly 220 includes one or more blades 225 attached to an agitator shaft 230. The blades 225 rotate at high speed to chop and crush any contents inserted into the inner jar container 122. The agitator shaft 230 is rotatable within a set of one or more agitator ball bearings 235 and an agitator bushing 240 which maintain the concentricity of the agitator shaft 230. The agitator bearings 235 locate the agitator shaft 230 and help to minimize any tolerances from assembly. The bushing 240 fastens and seals in the bearing assembly 235 into the bearing compartment of the agitator assembly. The agitator bearings 235 and bushing 240 therefore help to lower vibration of the agitator shaft 230, but still allow free and easy rotation of the agitator shaft 230 at high RPM. At the bottom of the agitator shaft 230 is a female coupling 245, which couples to male coupling 250 of the base 105. The agitator shaft 230 connects the blades 225 mounted on the top portion of the agitator shaft to the base motor shaft 340 through the female coupling 245 as will be hereinafter explained. The agitator shaft 230 concentricity is maintained through the tight tolerances with the bearings 235 to again minimize vibration.

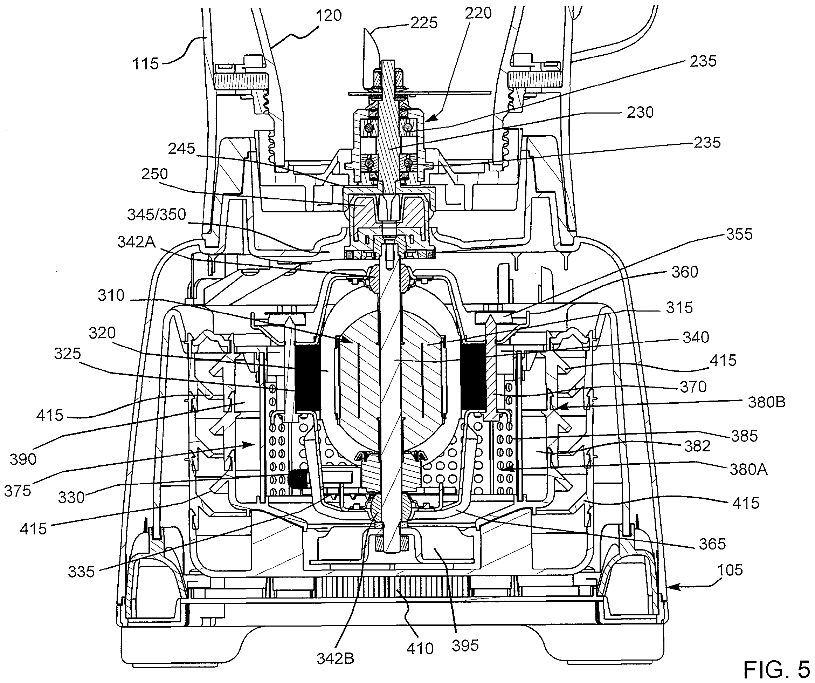

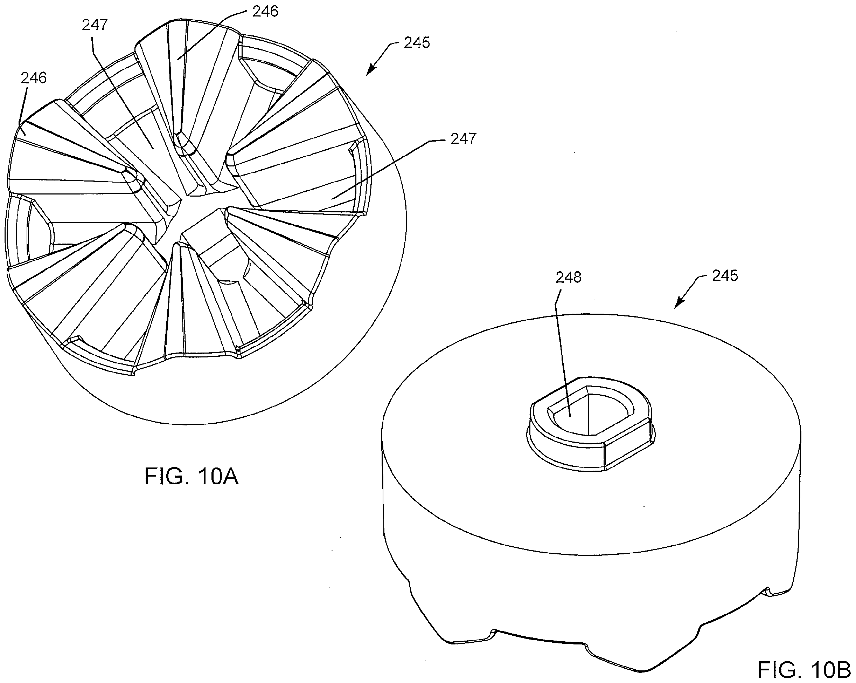

The female coupling 245 as best illustrated in Figs. 10A and 10B couples the motor shaft 340 (Figs. 3 and 5) to the agitator shaft 230. The female coupling 245 is made of both a steel or metal inner member 246 having a plurality of cavities 247 as best illustrated in Fig. 10A for mating with the male base coupling 250 as will be hereinafter explained. The inner metal member 246 may also include a soft elastomer over mold (not shown). The elastomer over mold on top of the inner metal member further prevents vibrational transfer between the base motor 310 and the agitator assembly 220. The female coupling 245 allows for the removal of the entire jar assembly 110 from the base housing 105 as well as the agitator shaft 230 from the motor 310. The top portion of the female jar coupling 245 as best illustrated in Fig. 10B includes an opening 248 for receiving and holding the agitator shaft 230.

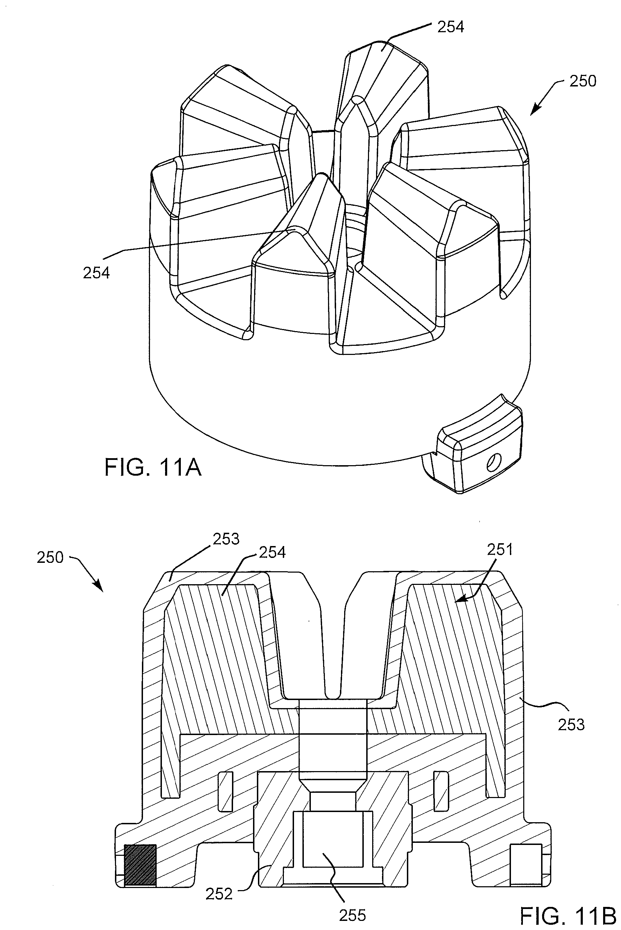

The base assembly 105 is best seen in Fig. 5 which illustrates a cross-sectional view inside the base assembly taken from side to side. A male coupling 250 is fixed to the top portion of the base housing 105 and is cooperatively engageable with the female jar coupling 245 so as to couple the motor shaft 340 to the agitator shaft 230 to transfer the rotation of the motor 310 to the agitator shaft 230 and blades 225. The male base coupling is best illustrated in Figs. 11A and 11B. Like the female coupling 245, the male coupling 250 may likewise include a steel or metal inner core 251, a metal drive portion 252 and an over molded soft elastomer 253 to help absorb vibration or coupling misalignment. The male inner core member 251 includes a plurality of projections 254 for mating with and being received by the corresponding cavities 247 associated with the female jar coupling 245. The over molded soft elastomer 253 can completely or partially cover the inner core member 251 and, in any event, should at least cover the projections 254 and the spaces therebetween, thereby providing an electrical isolation between the motor 310 and the jar environment. The over molded elastomer also dampens the interface between the male and female coupling. A rubber isolation member (not shown) may also be placed between the male inner core member 251 and the metal drive portion 252 to further dampen the interface between the connecting members. The metal drive portion 252 includes an opening 255 for receiving the motor shaft 340.

The male coupling 250 of the base assembly 105 is driven by the motor 310, which in turn drives the female coupling 245 to cause rotation of the agitator blade assembly 220. The coupling between the male coupling 250 and the female coupling 245 provides a removable connection between the base assembly 105 and its rotating motor 310, and the agitator blade assembly 220 of the jar assembly 110. Prior art couplings created a large component of overall system noise. Most prior art couplings use a loose-fitting drive system that includes a metal square male/female connector. This resulted in large tolerances between the connecting metal parts to accommodate for alignment issues between the jar female coupling and the base male coupling pin. These large tolerances meant an imbalance between the two mating parts, which created one of the largest sources of noise in the system.

The all metal prior art coupling of the base assembly to the mixing container has been changed to a larger, over-molded coupling 245/250 to again further reduce and suppress noise from the prior art appliances. In an example embodiment, the coupling 245/250 has a plurality of teeth or projections 254 on the male base side 250 of the coupling that engage the female jar side 245 of the coupling as explained above. The coupling 245/250 has a larger outer diameter than prior art couplings to allow for a more stable engagement between the coupling pieces 245/250. Both axial and rotational stability is provided by the two mating pieces of the coupling 245/250. The new "teeth" coupling 245/250, while having a metal base includes an over molded feature at least on the male base coupling that allows for a softer elastomer to be used that is both more forgiving of any vibrations emitted from the agitator blade assembly 220 or motor 310, and creates tighter tolerances. This helps to eliminate coupling noise.

In addition, by using spaced agitator bearings 235, the agitator shaft 230 is balanced with tight tolerances between the shaft 230 and the bearings 235. Prior art bearings inside the blade assembly 220 were stacked very close together. This meant that the top of the agitator shaft 230 could wobble slightly and create a vibration noise at high frequencies. As shown in Figs. 3 and 5, a space is now provided between the bearings 235 to allow for additional stability of the shaft 230 and thus the rotating agitator blades 225. The blade assembly 220 may be assembled together at very low temperatures and then allowed to expand to room temperature as assembled. This helps with proper vertical alignment of both the agitator shaft 230 and the agitator bearings 235.

Motor 310 may be an electric reversible motor having armature windings 315 and motor coil windings 320. The armature windings 315 are wound to induce an electromagnetic current that is opposite to the current produced in motor coil windings 320 on opposite sides. The armature elements are the rotational elements located inside of a rotational magnetic field that causes the armature to rotate about its central axis. This provides the rotational movement and torque of the motor 310 about the central axis to transfer rotational movement to the cutting agitator blades 225 for blending. Since the motor 310 is reversible, the magnetic field can be reversed to produce agitator blade rotation both in a forward and reversible direction. A stator 325, which may in an example embodiment be an eighteen bar element, transfers the AC current from the inputted wall current to the different windings inside the armature windings 315. This creates different electromagnetic fields that attract those opposite fields in the motor coil windings 320. Motor brushes 330 transfer current to and from the stator 325, and are located at a precise phase angle by a motor brush holder 335.

An armature shaft 340 is positioned along the rotational axis of the motor 310 such that rotation of the armature windings 315 causes rotation of the shaft 340. The shaft 340 is, in turn, connected to the male coupling 250 of the base assembly 105 for rotation thereof. As noted above, coupling between the male coupling 250 of the base assembly 105 and the female coupling 245 of the agitator blade assembly 220 allows the motor 310 to rotate the blade assembly 220 during blending or processing. Top motor bushing 342A and bottom motor bushing 342B located the armature shaft 340 and allow the shaft 340 to rotate freely therein.

An isolation coupling 345 and Hall Effect sensor 350 may be positioned along the armature shaft 340. The isolation coupling 345 may be made of a rubber material or the like, and helps to ensure that current is not transferred between the motor shaft 340 and the agitator shaft 230. The Hall Effect sensor 350 is preferably a magnetic rotational sensor that counts revolutions per minute (RPM). Every 360 degree rotation of the magnet represents 1 RPM as sensed by the sensor 350 once the magnet passes its magnetic field.

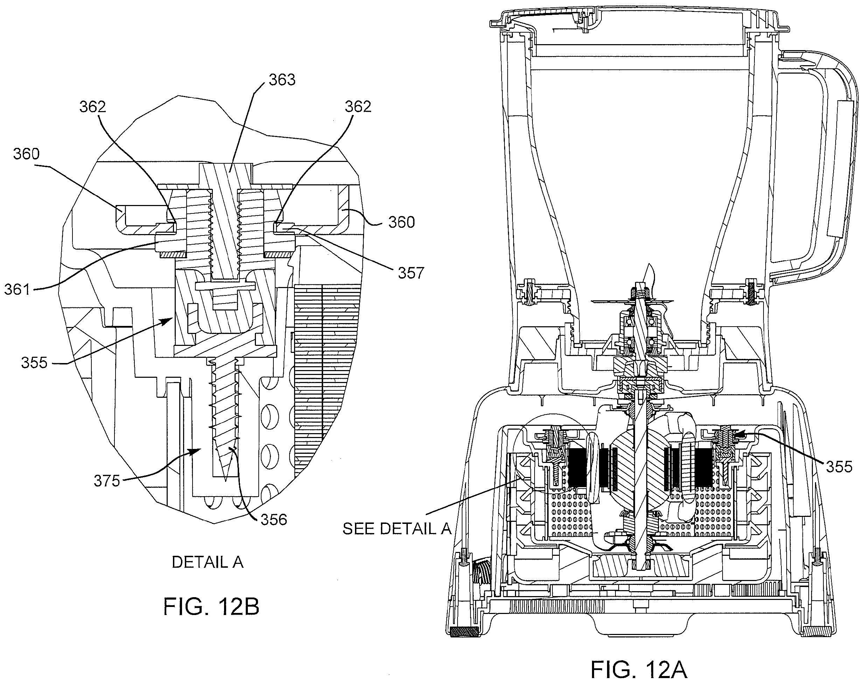

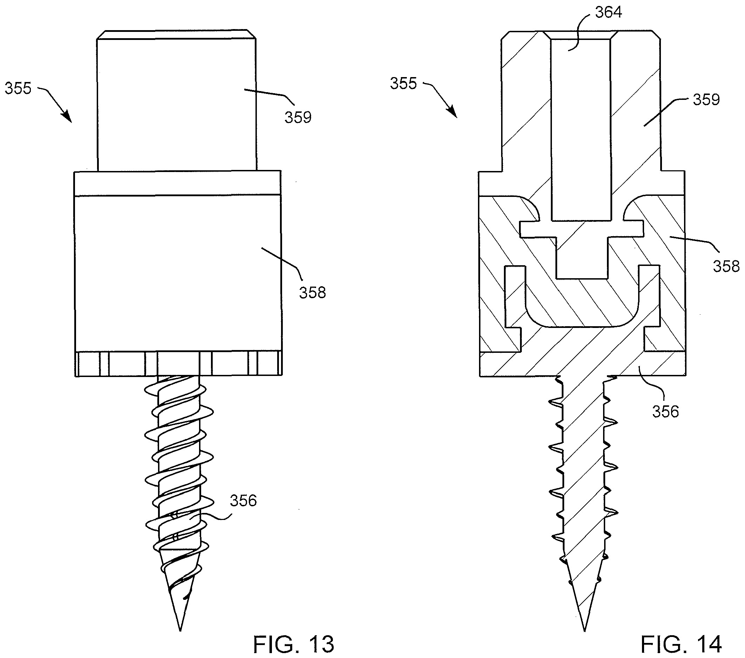

The motor 310 is supported on floating motor mounts 355 that attach to and extend from the top motor mount bracket 360 and the muffler assembly 375 as best illustrated in Figs. 12A, 12B, 13 and 14 as will be hereinafter explained. In an example embodiment, there may be four floating motor mounts 355, although other numbers are envisioned. The motor 310 "floats" on the floating motor mounts 355 which allow for some horizontal movement but limit vertical movement of the motor 310. The motor 310 mounts to a top motor mounting bracket 360 and a bottom motor mounting bracket 365 as best seen in Fig. 5. The top motor mounting bracket 360 mounts to the motor 310 at one end thereof to provide stiffness and rigidity. The top motor mounting bracket 360 also mounts to the floating motor mounts 355 as best shown in Figs. 12A and 12B, which each floating mount (Figs. 13 and 14) including a fastener member 356 that registers with a hole 357 (Fig. 12B) in the top motor mounting bracket 360, a flexible annular rubber member 358, and a top metal mount member 359. The top motor mounting bracket 360 also locates the motor shaft 340 through the top motor bushing 342A. O-rings that may be made of rubber or a similar damping material may be positioned between the top motor mounting bracket 360 and the floating motor mounts 355 to help prevent vibration transfer therebetween. The bottom motor mounting bracket 365 attaches to the top motor mounting bracket 360 via mounting bracket fasteners 370 and forms a sort of shell with the top motor mounting bracket 360 that houses the motor 310 and its components.

Mounting the motor 310 to the top motor mounting bracket 360 through the floating motor mounts 355 means that the motor 310 is allowed to move or float somewhat horizontally but not vertically as will be explained. A rubber grommet 361 is positioned over the top metal mount member 359 of the floating mount 355 and the floating mount 355 with the rubber grommet 361 is then inserted within the opening 357 formed in the top motor mounting bracket 360 as best illustrated in Fig. 12B. Since the outside diameter of the hole or opening 357 in the top motor mounting bracket 360 is slightly larger than the outside diameter of the rubber grommet 361, a gap 362 is formed between the outside diameter of the hole 357 and the outside diameter of the rubber grommet 361 as again best illustrated in Fig. 12B. This gap 362 allows for some horizontal movement of the motor due to vibration and other movement due to the operation of the motor. The fastener member 356 associated with the floating motor mount 355 is threaded into or otherwise attached to the muffler assembly 375 as again best shown in Fig. 12B thereby attaching the floating motor mount 355 to both the top motor bracket 360 and the muffler assembly 375 which will be explained later. A vertical retainer screw 363 is engaged with a corresponding opening 364 associated with the top metal mount member 359 of the floating motor mount 355 to attach both the mount 355 and its corresponding rubber grommet 361 to the top motor mounting bracket 360. This coupling of the floating motor mount 355 to both the top motor bracket 360 and the muffler assembly 375 accommodates for any coupling misalignment or torque spikes caused during operation and loading of the electric appliance and contributes significantly to the reduction in noise as less vibration from the motor 310 is transferred to the base housing 305. Only natural frequency vibration caused by the motor rotation and friction with the bushings and brushes remains and this is reduced and suppressed by the muffler assembly 375 described below.

The base assembly 105 also includes a muffler assembly 375 to help reduce noise generated by the motor 310 as best illustrated in Fig. 5. The muffler assembly 375 may include a muffler inner wall 380A and a muffler outer wall 380B. The inner wall 380A provides an airflow channel around the motor 310, while the outer wall 380B is located at a spaced distance from the inner wall 380A, such as for example a distance of approximately about half an inch radially outward from the inner wall 380A. The inner and outer walls 380A, 380B form a muffler chamber 382 therebetween. The inner wall 380A preferably includes one or more muffler holes 385 to allow sound pressure waves emitted by the motor 310 to pass through the inner wall 380A into the chamber 382 between the inner and outer walls 380A, 380B. An insulation material 390 such as a sound dampening material may be placed in the channel or chamber 382 between the inner and outer walls 380A, 380B to help dampen sound. The insulation material 390 may, in an example embodiment, be made of an expanded sponge material that traps air particles. Sound waves entering the sound dampening muffler chamber 382 are reduced and suppressed to further reduce the noise level of the electric appliance 100.

In addition to reducing the root cause of noise from the motor 310 via the floating motor mounts 355, the use of the additional muffler assembly 375 reduces the natural frequency noises that are not eliminated through motor balancing and mounting adjustments. Such natural frequencies are emitted from the motor 310 as it rotates as a result of things like: friction between the motor shaft 340 and the bracket bushings 342A, 342B; electrical whine caused by current flow; and any slight imbalance in the motor stator 325. Natural sound frequencies emitted from the motor 310 are generally low (below 1000hz), which can be attenuated using sound dampening material 390 in the muffler chamber surrounding the motor 310. The muffler chamber 382 between the muffler inner wall 380A and the muffler outer wall 380B is a sealed area of low pressure. The motor 310 area is an area of highpressure sound waves which pass through the muffler holes 385 into the chamber 382 between the muffler inner wall 380A and the muffler outer wall 380B. The sound pressure waves are exposed to stagnant air trapped inside the expanded foam/sponge material 390. This normalizes the pressure waves and can cause a drop of between 6 db to 10 db over a wide range of frequencies.

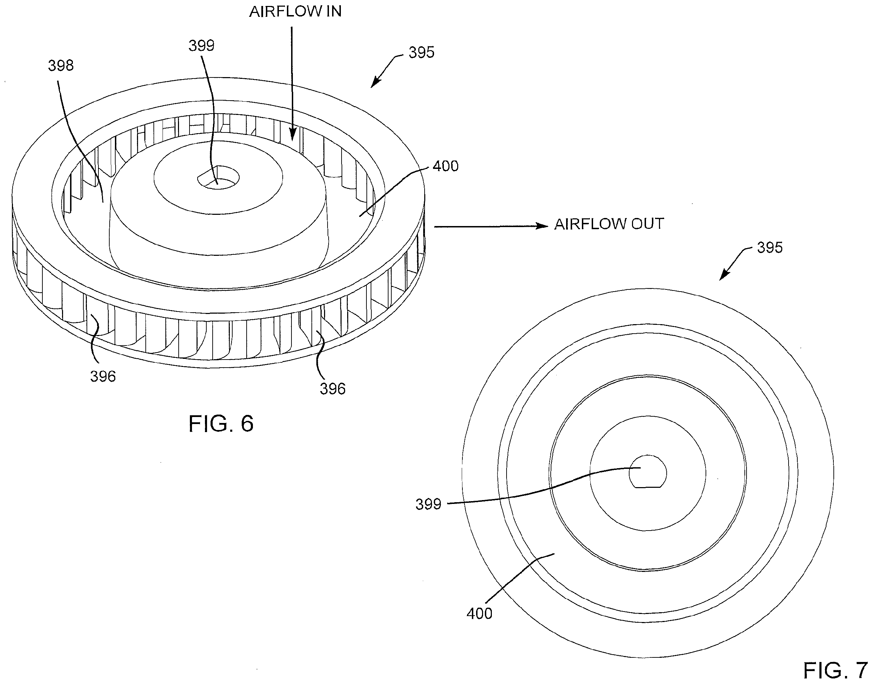

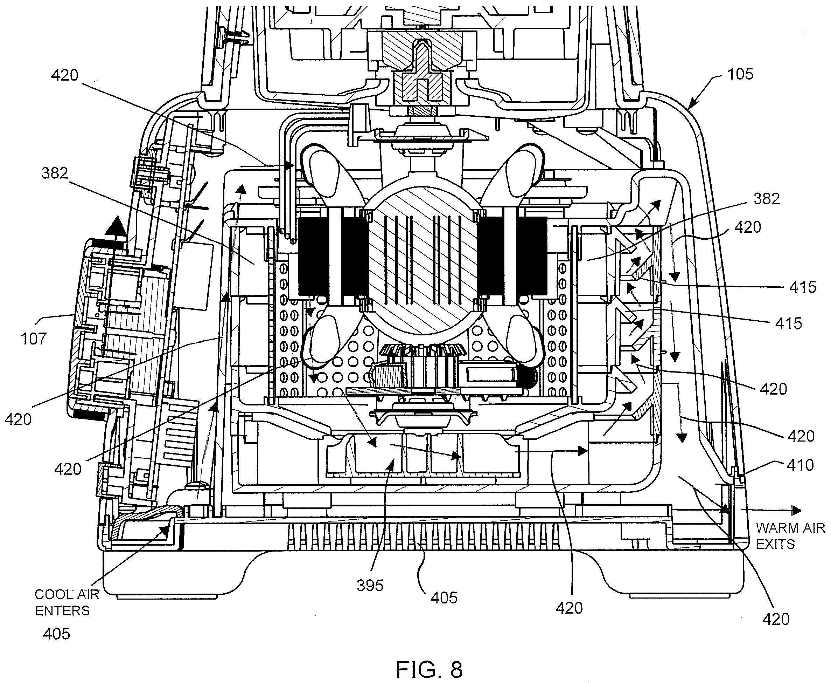

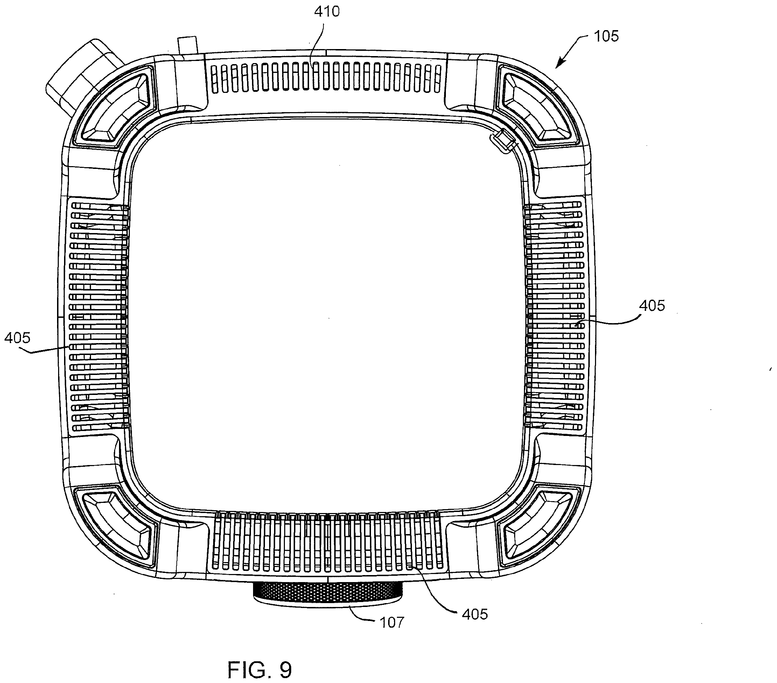

A centrifugal fan 395 is also positioned in the lower portion of the base assembly 105 as illustrated in Fig. 5. The centrifugal fan 395 may be powered by the rotation of the motor 310 in the example embodiment illustrated in Fig. 5 as will be further explained and Figs. 6 and 7 illustrate one embodiment of the centrifugal fan 395. Fig. 8 further shows an example airflow path through the base assembly 105 generated by the centrifugal fan 395. The centrifugal fan 395 draws air in through one or more intake vents 405 as best illustrated in Fig. 9, circulates the air over and/or around the motor 310 and other components where the air picks up heat, and then exits the hot air through a baffle system and through at least one exhaust vent 410 as will be hereinafter further explained. Fig. 9 illustrates one embodiment of the bottom portion of the base assembly 105 showing one configuration for the positioning of the intake vents 405 and the exhaust vent 410, although it is recognized and anticipated that different numbers and configurations of vents are also envisioned.

In prior art systems, a major contributor to overall system noise was the airflow caused by a fan attached to the motor armature shaft 340 and driven by the motor 310. Such fans were often stamped metal axial fans that were used for cooling the motor and electronic boards. Such fans have a relatively high sound level output at a broad spectrum of frequencies. By replacing an axial fan with a centrifugal fan 395, a longer airflow path is created as seen in Fig. 8, as the airflow is changed from an axial flow over the motor to lateral flow through the 90-degree centrifugal fan 395 as illustrated in Fig. 6. Blades 396 of the fan 395 were designed to move more air at higher pressures, while limiting noise during rotations of 12000+ RPM (whereas most fans spin at 1200 to 3000 RPM) as will be hereinafter further explained.

To further limit airflow noise, a so-called torturous airflow path 420 is now created within the base assembly 105 as best seen in Fig. 8. The airflow path of Fig. 8 has been optimized for sound reduction while still maintaining maximum airflow over the motor 310 for cooling. The centrifugal fan 395 pulls air into the base assembly 105 through inlet ports or vents 405 (Figs. 8 and 9) located at the front and sides of the base assembly 105 and pushes air up almost the entire height of the base assembly 105, then over the top of the motor 310 and down back over the motor 310 to cool its components as they are heated by electrical current and friction. This also allows air to flow over the muffler chamber 382 which pulls the air over the entire length of the muffler chamber from top to bottom and thus over the entire length of the motor 310. The air is then directed vertically downward into the centrifugal fan 395 as shown in Fig. 8, which fan is driving the airflow of the system, and then exits laterally at 90 degrees to the fan intake direction as shown in Fig. 8. The air is then directed over the torturous airflow path 420 where it changes direction multiple times as it progresses through a path of baffles 415 as best seen in Figs. 5 and 8 that help to lock in some areas of low pressure where the sound pressure waves can expand before exiting through a rear exhaust vent 410. The baffles 415 have areas of low pressure underneath each baffle that allows for the high pressure sound waves to further expand and reduce noise. Air is then directed out of the base assembly 105 through exhaust vent 410. This helps to limit the exit noise of the fan 395 considerably. The air is kept moving through the base assembly 105 by the centrifugal fan 395.

The centrifugal fan 395 includes a blade design 396 as best illustrated in Fig. 6 which has been created with a backward blade design with an airfoil profile. This design helps increase the pressure in the fan needed to circulate the air through the multiple cavity inlets, across the motor 310, over the tortuous airflow path 420 and through the exit vent 410. A larger pressure is required to maintain proper airflow over the motor 310 for cooling.

The centrifugal fan 395 intakes air through the central intake area 398 and such air is then expelled through the blades 396 in a direction which is 90° to the intake direction as best shown in Fig. 6. This change in direction of the air accelerates the air through the centrifugal force generated by the fan blades 396. The fan blades are designed to increase the pressure while still maintaining a steady state airflow velocity.

In the example illustrated in Fig. 6, the fan 395 has a total of 38 fan blades 396 that intake smaller amounts of air that increase the system airflow pressure. This provides the airflow with the necessary force to move through the system parts without stalling. The fan 395 includes an opening 399 for coupling to the motor shaft 340. The bottom wall surface 400 of fan 395 as best illustrated in Fig. 7 is flat and solid so as to redirect the incoming airflow through the fan blades 395 without allowing airflow to escape through the bottom portion of the fan.

Because the centrifugal fan can pull in air from multiple sides of the base housing 105 and because of its centrifugal operation, the motor 310 can be operated either in a forward or reverse direction without impacting the airflow through the base housing 105 and over and around the motor 310 and its components. The centrifugal fan 395 provides a constant direction airflow even when the motor 310 is operated in reverse.

In an alternative embodiment, another method to further reduce any airflow noise caused by the centrifugal fan 395 or an axial fan which is attached to or driven by the motor 310 is to use a detached fan in place of an axial or centrifugal fan driven by the motor 310. A detached fan is not attached to the shaft 340 of motor 310 but, instead, is independently driven by a separate DC motor or other power means housed within the base assembly 105. A detached fan is therefore not driven by the motor 310. Detached fans generally operate at much lower speeds than the centrifugal fan 395 which is driven by the motor 310. This creates less airflow noise than an attached centrifugal fan 395. Despite the lower speeds, detached fans can still generate the same airflow over the motor 310, although they generally generate less pressure. Thus a less aggressive torturous path 420 can be used to lessen the amount of pressure needed to move enough air through the system without stalling the detached fan. When the blender 100 is used for extended periods of time, the detached fan can cool heat buildup in the motor 310 and electrical components by varying its speed. Varying speeds can be programmed into the microprocessor and other electronic equipment housed within the base assembly 105 for operating the various modes of operation associated with the present appliance 100.

The fan speed associated with a detached fan can be controlled independently of the speed of the motor 310 based on the amount of cooling that is actually needed in the system. At lower RPM with a higher load, more current is drawn by the motor 310 and thus more heat is generated in the motor. However the fan speed on the centrifugal fan 395 which is attached to and driven by the motor 310 can only spin at the speed the motor is spinning at, that is, low at lower RPMs. Thus during this condition, more air is needed and a detached fan can be set or programmed to operate at a higher speed to move more air over the motor 310 while it is spinning at low speeds under high load. Since detached fans generally operate at much lower speeds than the centrifugal fan 395, they create less airflow noise and are thus much quieter than the attached centrifugal fan 395. The detached fan can be either an axial fan or a centrifugal fan although a centrifugal fan is generally preferred for the reasons explained above. Varying the speed changes the airflow over the motor 310 to provide the necessary amount of cooling needed depending upon the operation and load of the motor 310 and these various speeds can be programmed into the microprocessor associated with the appliance 100 based upon the RPM, temperature and/or work load of the motor 310. Sensors can be provided to communicate the RPM, temperature and/or load of the motor to the microprocessor to control the speed of the detached fan.

It is also recognized and anticipated that the present floating motor mount 355, the muffler assembly 375, the centrifugal fan 395, and the torturous airflow path 420 with or without the baffles 415 can be used in any electric appliance or any base assembly housing a motor in order to achieve noise reduction as explained above. It is also recognized and anticipated that these components can be used individually or in any combination with each other within any particular base assembly which houses a motor. The present components and their structure and operation are not limited to a particular electric appliance.

It is also recognized and anticipated that the double wall jar assembly 110 can likewise be used in any electric appliance where ajar assembly is required, or any other device which utilizes ajar assembly whether or not the jar assembly includes an agitator blade assembly such as blade assembly 220 discussed above. Here again, the present double wall jar assembly 110 can be used with any device which requires ajar assembly, with or without a motor assembly associated therewith, and the present jar structure is not limited to an electric appliance.

Thus, there has been shown and described a noise reduction electric appliance. As is evident from the foregoing description, certain aspects of the present inventions are not limited by the particular details of the examples illustrated herein, and it is therefore contemplated that other modifications, applications, variations, or equivalents thereof, will occur to those skilled in the art. Many such changes, modifications, variations and other uses and applications of the present constructions will, however, become apparent to those skilled in the art after considering the specification and the accompanying drawings. All such changes, modifications, variations and other uses in applications which do not depart from the scope of the present inventions are deemed to be covered by the inventions which are limited only by the claims which follow.

## Claims

1. A blender (100) comprising:
a base assembly including a base housing (105);
a motor (310) positioned within the base housing; at least one floating motor mount (355) coupled to the motor, **characterized by** further comprising
top and bottom motor mounting brackets (360, 365) attachable to the motor, the top motor mounting bracket being further attachable to the at least one floating motor mount (355); and
a flexible member (361) positioned in association with the at least one floating motor mount (355) and wherein the top motor mounting bracket (360) includes an opening (357), the flexible member (361) having an outer diameter less than the outer diameter of the opening (357), the flexible member (361) and at least a portion of said at least one floating motor mount (355) being positionable within the opening (357) in said top motor mounting bracket (360) wherein a gap (362) is formed between said opening (357) and the flexible member (361).

2. The blender defined in claim 1 including a muffler assembly (375) at least partially surrounding the motor within the base assembly (105), the muffler assembly including an inner muffler wall (380A) having a plurality of throughholes extending therethrough, and an outer muffler wall (380B) spaced from the inner muffler wall forming a muffler chamber (382) therebetween.

3. The blender defined in claim 2 wherein the muffler chamber (382) includes a sound dampening material (390).

4. The blender defined in claim 1 including a fan (395) positioned within the base housing (105) for circulating air along a path through the base housing and at least partially around the motor (310).

5. The blender defined in claim 4 wherein the airflow path (420) through the base housing (105) includes a plurality of baffles (415) positioned within at least a portion of the airflow path.

6. The blender defined in claim 1 including a jar assembly (110) selectively engageable with the base assembly (105).

7. The blender defined in claim 6 wherein the jar assembly (110) includes an inner jar wall (120) forming an inner jar container, an outer jar wall (115) spaced outwardly from the inner jar wall forming an air gap therebetween, the air gap forming an outer jar container.

8. The blender defined in claim 7 wherein the inner jar container includes an agitator blade assembly (220), the agitator blade assembly including an agitator shaft (230) for connection to the motor in the base assembly, said agitator blade assembly including one or more blades (225) extending from a top portion of the agitator shaft within the inner jar container, one or more agitator bearings (235) positioned along said shaft to permit rotation of the shaft while preventing radial movement thereof, and a female coupling (245) connected to a bottom portion of the agitator shaft (230).

9. The blender defined in claim 8 wherein the base assembly includes a male coupling (250), said male coupling being attachable to the motor shaft (340) in said base assembly (105), the female coupling being engageable with the male coupling for allowing the motor in the base assembly to drive the agitator blade assembly.

## Patentansprüche

1. Mixer (100), umfassend:
eine Basisanordnung, die ein Basisgehäuse (105) beinhaltet,
einen Motor (310), der innerhalb des Basisgehäuses positioniert ist, zumindest ein schwebende Motorbefestigung (355), die mit dem Motor gekoppelt ist, **dadurch gekennzeichnet, dass** er ferner umfasst
obere und untere Motorbefestigungsarme (360, 365), die an dem Motor anbringbar sind, wobei der obere Motorbefestigungsarm ferner an der zumindest einen schwebenden Motorbefestigung (355) anbringbar ist, und
ein flexibles Element (361), das in Zuordnung zu der zumindest einen schwebenden Motorbefestigung (355) positioniert ist, und wobei der obere Motorbefestigungsarm (360) eine Öffnung (357) beinhaltet, wobei das flexible Element (361) einen Außendurchmesser aufweist, der geringer ist als der Außendurchmesser der Öffnung (357), das flexible Element (361) und zumindest ein Abschnitt der zumindest einen schwebenden Motorbefestigung (355) innerhalb der Öffnung (357) in dem oberen Motorbefestigungsarm (360) positionierbar ist, wobei ein Spalt (362) zwischen der Öffnung (357) und dem flexiblen Element (361) ausgebildet ist.

2. Mixer nach Anspruch 1, der eine Schalldämpfer-Anordnung (375) beinhaltet, die zumindest zum Teil den Motor innerhalb der Basisanordnung (105) umgibt, wobei die Schalldämpfer-Anordnung eine innere Schalldämpfer-Wand (380A) beinhaltet, die mehrere Durchgangslöcher aufweist, die sich dort hindurch erstrecken, sowie eine äußere Schalldämpfer-Wand (380B), die von der inneren Schalldämpfer-Wand unter Bildung einer Schalldämpfer-Kammer (382) dazwischen beabstandet ist.

3. Mixer nach Anspruch 2, wobei die Schalldämpfer-Kammer (382) ein schalldämmendes Material (390) umfasst.

4. Mixer nach Anspruch 1, der ein Gebläse (395) beinhaltet, das innerhalb des Basisgehäuses (105) positioniert ist, zum Umwälzen von Luft entlang eines Pfads durch das Basisgehäuse und zumindest zum Teil um den Motor (310) herum.

5. Mixer nach Anspruch 4, wobei der Luftströmungspfad (420) durch das Basisgehäuse (105) mehrere Umlenkungen (415) beinhaltet, die innerhalb zumindest eines Abschnitts des Luftströmungspfads positioniert sind.

6. Mixer nach Anspruch 1, der eine Schalen-Anordnung (110) beinhaltet, die selektiv mit der Basisanordnung (105) in Eingriff bringbar ist.

7. Mixer nach Anspruch 6, wobei die Schalen-Anordnung (110) eine innere Schalenwand (120), die einen inneren Schalenbehälter bildet, und eine äußere Schalenwand (115) beinhaltet, die von der inneren Schalenwand unter Bildung eines Luftspalts dazwischen nach außen beabstandet ist, wobei der Luftspalt einen äußeren Schalenbehälter bildet.

8. Mixer nach Anspruch 7, wobei der innere Schalenbehälter eine Rühr-/Schneidklingen-Anordnung (220) beinhaltet, wobei die Rühr-/Schneidklingen-Anordnung eine Rührwelle (230) zur Verbindung mit dem Motor in der Basisanordnung beinhaltet, wobei die Rühr-/Schneidklingen-Anordnung einen oder mehrere Flügel (225), die sich von einem oberen Abschnitt der Rührwelle innerhalb des inneren Schalenbehälters weg erstrecken, ein oder mehrere Rührlager (235), die entlang der Welle positioniert sind, um die Drehung der Welle zu erlauben, während sie eine radiale Bewegung derselben verhindern, sowie eine Kupplungsaufnahme (245) beinhaltet, die mit einem unteren Abschnitt der Rührwelle (230) verbunden ist.

9. Mixer nach Anspruch 8, wobei die Basisanordnung eine Einsteckkupplung (250) beinhaltet, wobei die Einsteckkupplung an der Motorwelle (340) in der Basisanordnung (105) anbringbar ist, wobei die Kupplungsaufnahme mit der Einsteckkupplung in Eingriff bringbar ist, um dem Motor in der Basisanordnung zu erlauben, die Rühr-/Schneidklingen-Anordnung anzutreiben.

## Revendications

1. Mélangeur (100) comprenant :
un ensemble de base comprenant un boîtier de base (105) ;
un moteur (310) positionné à l'intérieur du boîtier de base ; au moins un support de moteur flottant (355) couplé au moteur, **caractérisé en ce qu'**il comprend en outre :
des supports de montage de moteur supérieur et inférieur (360, 365) pouvant être fixés au moteur, le support de montage de moteur supérieur pouvant être en outre fixé sur le au moins un support de moteur flottant (355) ; et
un élément flexible (361) positionné en association avec le au moins un support de moteur flottant (355) et dans lequel le support de montage de moteur supérieur (360) comprend une ouverture (357), l'élément flexible (361) ayant un diamètre externe inférieur au diamètre externe de l'ouverture (357), l'élément flexible (361) et au moins une partie dudit au moins un support de moteur flottant (355) pouvant être positionnée à l'intérieur de l'ouverture (357) dans ledit support de montage de moteur supérieur (360), dans lequel un interstice (362) est formé entre ladite ouverture (357) et l'élément flexible (361).

2. Mélangeur selon la revendication 1, comprenant un ensemble de silencieux (375) entourant au moins partiellement le moteur à l'intérieur de l'ensemble de base (105), l'ensemble de silencieux comprenant une paroi de silencieux interne (380A) ayant une pluralité de trous débouchants s'étendant à travers cette dernière, et une paroi de silencieux externe (380B) espacée de la paroi de silencieux interne formant une chambre de silencieux (382) entre elles.

3. Mélangeur selon la revendication 2, dans lequel la chambre de silencieux (382) comprend un matériau d'insonorisation (390).

4. Mélangeur selon la revendication 1, comprenant un ventilateur (395) positionné à l'intérieur du boîtier de base (105) pour faire circuler l'air le long d'une trajectoire à travers le boîtier de base et au moins partiellement autour du moteur (310).

5. Mélangeur selon la revendication 4, dans lequel la trajectoire d'écoulement d'air (420) à travers le boîtier de base (105) comprend une pluralité de déflecteurs (415) positionnés dans au moins une partie de la trajectoire d'écoulement d'air.

6. Mélangeur selon la revendication 1, comprenant un ensemble de bol (110) pouvant sélectivement se mettre en prise avec l'ensemble de base (105).

7. Mélangeur selon la revendication 6, dans lequel l'ensemble de bol (110) comprend une paroi de bol interne (120) formant un contenant de bol interne, une paroi de bol externe (115) espacée vers l'extérieur de la paroi de bol interne en formant un entrefer entre elles, l'entrefer formant un contenant de bol externe.

8. Mélangeur selon la revendication 7, dans lequel le contenant de bol interne comprend un ensemble de pale(s) d'agitateur (220), l'ensemble de pale(s) d'agitateur comprenant un arbre d'agitateur (230) pour le raccordement au moteur dans l'ensemble de base, ledit ensemble de pale(s) d'agitateur comprenant une ou plusieurs pales (225) s'étendant à partir d'une partie supérieure de l'arbre d'agitateur dans le contenant de bol interne, un ou plusieurs paliers d'agitateur (235) positionnés le long dudit arbre pour permettre la rotation de l'arbre tout en empêchant son mouvement radial, et un couplage femelle (245) raccordé à une partie inférieure de l'arbre d'agitateur (230).

9. Mélangeur selon la revendication 8, dans lequel l'ensemble de base comprend un couplage mâle (250), ledit couplage mâle pouvant être fixé à l'arbre de moteur (340) dans ledit ensemble de base (105), le couplage femelle pouvant se mettre en prise avec le couplage mâle pour permettre au moteur, dans l'ensemble de base, d'entraîner l'ensemble de pale(s) d'agitateur.
